# EUROPEAN PATENT APPLICATION

(11) **EP 1 445 925 A2**
(43) Date of publication of application: **11.08.2004**
(21) Application number: 04002690.8
(22) Date of filing: 06.02.2004
(51) Int. Cl.: H04M 3/42, H04M 7/00, H04M 3/436

(54) **Call screening based on location and context**

(30) Priority: 06.02.2003 KR 2003007443
(71) Applicant: Samsung Electronics Co., Ltd., Suwon-si, Gyeonggi-do (KR)
(72) Inventor: Park, Tae-suh c/o Samsung Advanced Inst. of Techn., Yongin-si Gyeonggi-do (KR); Lee, Sang-goog, dong Dongan-gu Anyang-si Gyeonggi-do (KR)
(74) Representative: Grünecker, Kinkeldey, Stockmair & Schwanhäusser Anwaltssozietät

(57) **Abstract**

A context-based communication method and a context-based mobile telecommunication system are provided. A context-based mobile telecommunication system (14), comprises: a context generator (15), which generates and stores context information containing a locational attribute and its communications restriction policy on a predetermined area; and a terminal (16), which is automatically set to a predetermined operation mode according to a mediated policy obtained by negotiating between a right-to-communications exercising policy previously set therein and the communications restriction policy, in response to the context information, transmitted from the context generator (15).

## Description

### BACKGROUND OF THE INVENTION

### 1. Field of the Invention

The present invention relates to a mobile telecommunication system, and more particularly, to a context-based mobile telecommunication method and a context-based mobile telecommunication system for an environment where communications are limited to some extent.

### 2. Description of the Related Art

Modern mobile telecommunication services, which represented by cellular phones, allow people to communication with one another at anywhere, anytime. Such accessibility has come with not only convenience but also inconvenience, usually socially problematic. One of the serious problems of the current mobile telecommunication system is that it enables unwelcome calling, not considering the receiver's context, in restricted or sensitive areas where loud talk or noisy notification of calling is unacceptable. Accordingly, as the first solution suggested, jamming technologies, which block radio signal and therefore prevent the use of mobile telecommunication devices in certain areas, have been developed. For example, phone jamming technologies discourage mobile phone users from using their mobile phones in predetermined circumstances or contexts where there is a strong need to restrict communications, such as theaters or libraries. However, nature of the jamming technologies, unilateral and indiscriminate prohibition, causes another problem since it ignores individuals' various needs. For example, the technology can block calling that are urgent enough to ignore the rule of restriction in the area. In this case, the jamming could infringe upon the individuals' rights to communicate with one another and would cause serious inconveniences to them. An alternative to the jamming technologies could be to resort to people's conscience in hopes that they are willing to refrain from using their mobile telecommunication devices in the place where communication restrictions is required. However, the alternative is not always working because of people's indifference or ignorance.

Such problems of inconsiderate or inappropriate calls originate from the fact that people hardly know about others' surroundings or contexts. In other words, if two people don't know of each other's state or context, each of them can hardly figure out whether making a call will cause trouble to the other or whether a call from the other is for an important purpose. In order to solve this problem, various methods such as caller identification services or "Buddy List" of instant messengers have been suggested and used for exchanging information on their contexts. The caller identification services, in particular, help a receiver, who is supposed to receive a call, to estimate the priority of the call and so determine what would be an appropriate response to the call received, by giving identification information of a caller to the receiver in advance. However, from the caller's point of view, the caller identification services are hardly useful because the services do not deliver information about the receiver's context to the caller. From the receiver's point of view, the caller identification services are still unsatisfactory enough because it still distracts users by asking them to estimate the priority of the calling, just by using the caller's identification, and to determine actions appropriate to the receiver's context. The instant messengers, which have been widely used on a data communication network not requiring real-time communication - contrary to voice telecommunication network (i.e., telephones), provide a "buddy list," a list of registered friends and their online status. The list in the instant messengers may help a caller to determine when would be an appropriate moment for the caller to make a call. Thus, the same concept has been adopted to some smart phones or telephone-embedded personal digital assistants (PDAs). However, the "buddy list" approach still requires users to input their context information manually in almost all cases, and thus also distract the users' attention.

More enhanced techniques for imposing restrictions on inconsiderate or inappropriate mobile telecommunications have been disclosed in U.S. Patent No. 6,327,535 and No. 5,740,539. The former, U.S. Patent No. 6,327,535, discloses a method of generating and transmitting location-wise context information, and the latter, U.S. Patent No. 5,740,539, discloses a method of informing a caller that the receiver cannot receive a call from the caller because the receiver is not in the proximity to his/her mobile phone for some reason.

In addition, in "Context-aware Telephony Over WAP" (Personal and Ubiquitous Computing, Vo. 4, 2000, pp. 225- 229), Schmidt, A. et al., has proposed another conventional context-based communication technology, which requires a user to manually input context information and appropriate ways of treating calls, for cellular phones.

### SUMMARY OF THE INVENTION

The present invention provides a context-based mobile telecommunication method of automating the process of collecting context information and mediating communication methods, considering both the contexts of the caller and the receiver and recommended communications restriction policy of the area in which the receiver is involved, and therefore reducing distraction and establishing decorous communication.

The present invention also provides a terminal, which is suitable for the context-based mobile telecommunication method, and a mobile telecommunication system including the mobile terminal.

According to an aspect to the present invention, there is a context-based terminal, comprising: a communication module, which enables mobile telecommunications between terminals and receives a context information containing a locational attribute and its communications restriction policy transmitted from a predetermined area; and a control module, which automatically switches an operation mode of the context-based terminal to another according to a mediated policy obtained by negotiating between the communications restriction policy and a right-to-communications exercising policy previously set in the context-based terminal.

According to another aspect to the present invention, there is a context-based mobile telecommunication system, comprising: a context generator, which generates and stores context information containing a locational attribute and its communications restriction policy on a predetermined area; and a terminal, which is automatically set to a predetermined operation mode according to a mediated policy obtained by negotiating between a right-to-communications exercising policy previously set therein and the communications restriction policy, in response to the context information, transmitted from the context generator.

According to still another aspect to the present invention, there is a context-based communication method, comprising: (a) creating and sending context information containing a locational attribute and its communications restriction policy on a predetermined area; (b) allowing a terminal to receive the context information; (c) obtaining a mediated policy by negotiating between the communications restriction policy and a right-to-communications exercising policy previously set in the terminal; and (d) switching an operation mode of the terminal to another operation mode, according to the mediated policy.

### BRIEF DESCRIPTION OF THE DRAWINGS

The above and other features and advantages of the present invention will become more apparent by describing in detail exemplary embodiments thereof with reference to the attached drawings in which:
FIG. 1 is a schematic block diagram of a context-based mobile telecommunication system according to a preferred embodiment of the present invention;
FIG. 2 is a diagram illustrating a method of associating an attribute element with operating elements according to a mediated policy by using a terminal;
FIG. 3 is a block diagram of a context-based mobile telecommunication system, according to a preferred embodiment of the present invention;
FIG. 4 is a detailed block diagram of the context-based mobile telecommunication system of FIG. 3;
FIG. 5 is a diagram illustrating parameters included in each element of the context-based mobile telecommunication system of FIG. 3;
FIG. 6 is a flowchart illustrating the operation of the receiving terminal when it enters or exits the communication-restricted area;
FIG. 7 is a flowchart illustrating the operation of a receiver's terminal according to an operation mode determined in step 64 of FIG. 6;
FIG. 8 is a diagram illustrating an example of a method of associating an attribute element of a terminal with an operation element of the terminal according to a policy determined appropriate for a conference room setting; and
FIG. 9 is a flowchart illustrating the operation of a receiver's terminal and a caller's terminal according to the method of associating an attribute element of a terminal with an operation element of the terminal of FIG. 8.

### DETAILED DESCRIPTION OF THE INVENTION

Hereinafter, the structure and operation of a context-based mobile telecommunication system according to the present invention and a context-based mobile telecommunication method according to the present invention will be described in greater detail with reference to the accompanying drawings.

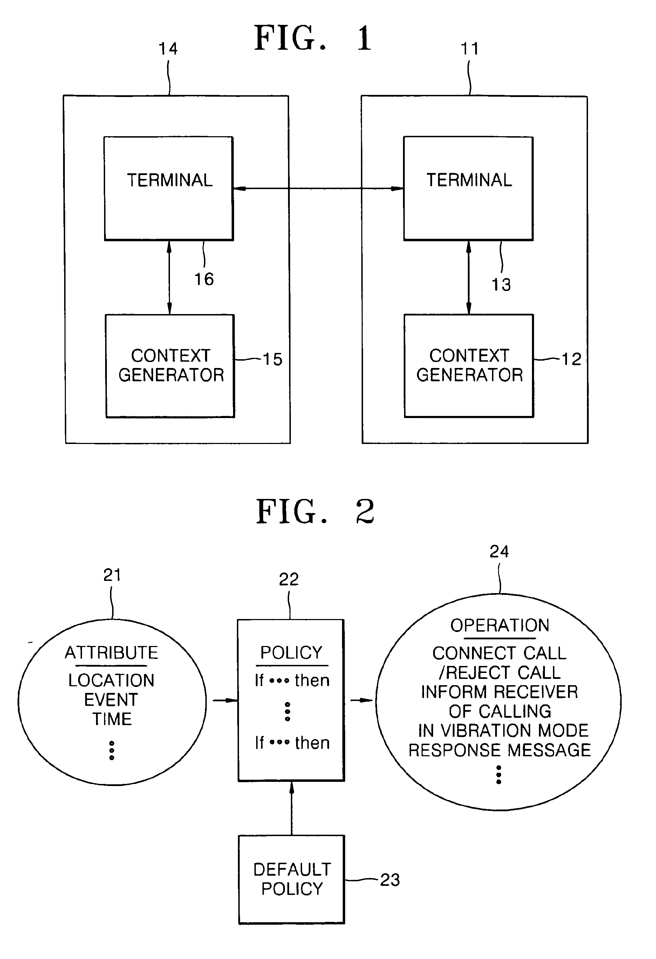

FIG. 1 is a schematic block diagram of a context-based mobile telecommunication system according to a preferred embodiment of the present invention. Referring to FIG. 1, reference numerals 11 and 14 represent areas to which a communications restriction policy is applied (hereinafter, referred to as communication-restricted areas), reference numerals 12 and 15 represent context generators, and reference numerals 13 and 16 represent terminals. The context generators 12 and 15 may be integrated into one body with the terminals 13 and 16, respectively, or may be separate from the terminals 13 and 16, respectively. The context generators 12 and 15 and the terminals 13 and 16 include a wired or wireless communication module (not shown) so that they can recognize one another and exchange their context information with one another.

Referring to FIG. 1, the context generators 12 and 15 transmit context information containing a locational attribute and its appropriate communication restriction policies on the communication-restricted areas 11 and 14, respectively, to the terminals 13 and 16, respectively. The context generators 12 and 15 respectively store communications restriction policies, which are recommended based on the locational attribute on the communication-restricted areas 11 and 14, respectively. The context generators 12 and 15 can be realized as local servers (not shown) located in the communication-restricted areas 11 and 14, respectively, or locational attribute sensors (not shown) installed in the terminals 13 and 16, respectively. Here, the local servers, which can be realized as common computer systems, store and transmit the locational attribute information on the communication-restricted areas 11 and 14. In addition, the local servers can generate the locational attribute on the communication-restricted areas 11 and 14 using conventional technology, such as computer-visions, color codes, or radio-frequency (RF) tags. The context sensors, such as cameras or sensors, which can be installed in the terminals 13 and 16, can generate the context information by sensing the locational attribute on the communication-restricted areas 11 and 14. For example, video cameras, which are attached to a wearable computer so that they can perform recognizing the visually captured area by using special tags, could be used as the locational attribute sensors.

In this regard, the locational attribute element and default policy corresponding to a specific place are preferably stored in the terminals 13 and 16 in advance. For example, a hospital may has an attribute of "the place where it should be clean and safe" and its corresponding default policy such as "no pets" or "no mobile phone use."

The terminals 13 and 16 exchange information with external devices in a wired or wireless manner. In the terminals 13 and 16, a program that enables a context-based communication method according to the present invention is stored. The terminals 13 and 16 can be realized as typical mobile phones, PDA phones, smart phones, laptop computers with telecommunication functions, or wearable computers. The terminals 13 and 16 automatically set their operation modes according to a mediated policy which obtained as a result of negotiation between a user's right-to-communications exercising policy and a recommended communications restriction policy in the communication-restricted areas 11 and 14. In addition, the terminals 13 and 16 edit the locational attribute information according to the mediated policy and then transmit the edited locational attribute information to a caller or a predetermined communication participant by using a wired or wireless communication means. In this regard, the terminals 13 and 16 may include a long-distance communication device that follows conventional long-distance wireless communication regulations, such as CDMA or TDMA.

If the terminal 13 or 16 doesn't have a right-to-communications exercising policy, it sets operating mode corresponding to a predetermined communications restriction policy that is recommended by the context generator 12 or 15. If no communications restriction policy has been recommended by the context generator 12 or 15 or if the predetermined communications restriction policy recommended by the context generator 12 or 15 is opposing to the user-defined right-to-communications exercising policy, the terminal 13 or 16 basically follows a right-to-communications exercising policy and adopts the acceptable parts of the opposing communications restriction policy.

FIG. 2 is a diagram illustrating a method of associating an attribute element 21 of a terminal with an operation element 24 of the terminal according to the mediated policy. Firstly, the attribute element 21 includes a set of attributes of a predetermined area, in which a user is located, and user contexts. Secondly, the operation element 24 includes a set of various operation modes that can be performed by the terminal 13 or 16, and lastly a policy element 22 includes a set of rules that are made with a default policy 23 taken into account. The policy element 22 determines which operation mode should be selected for a predetermined attribute of the predetermined area where the user is located by appropriately matching the attribute element 21 with the operation element 24.

Referring to FIG. 2, the attribute element 21, which is generated by the context generator 12 or 15, includes spatial attributes of the predetermined area where the user is located (e.g., indicating whether the predetermined area is a conference room, a movie theatre, a plaza, a bedroom, or a kitchen), temporal attributes of the predetermined area (e.g., indicating whether the user is in the middle of a conference, watching a movie, doing exercising, sleeping, or eating something), and other necessary parameters (for example, the running time of the movie that the user is watching, or the purpose of the meeting at the conference room). Selecting appropriate attributes of the predetermined area in which the user is located is based on the relevance to the operation element 24.

The policy element 22, which includes a set of rules that are written as 'if-then' sentences or state diagrams, is a function that associates a predetermined attribute specified in the attribute element 21 with a predetermined operation mode specified in the operation element 24 according to a user definition or a recommended definition with the default policy 23 taken into consideration. Assume that a policy A is recommended for a predetermined area A, and the policy A specifies a rule that calls made by those who are not closely related to a user's business will be rejected on the assumption that the user is attending a meeting in a conference room. In this case, if a user is located in the predetermined area A (Conference room) and sets his/her terminal to conform to the policy A, all calls are automatically rejected by the time when the meeting is over and therefore the user doesn't be interrupted by unnecessary phone calls during the meeting at the conference room.

The operation element 24 consists of various basic operations and their combinations deciding whether to make or receive a call, methods of making or receiving a call, methods of informing the user that a call has been received, and methods of controlling the level of exposure of user's context information to callers.

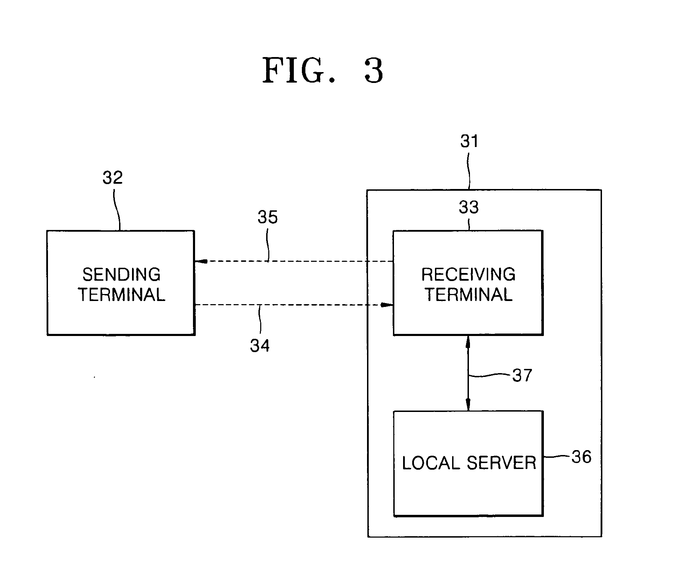

FIG. 3 is a block diagram of a context-based mobile telecommunication system according to a preferred embodiment of the present invention. In the context-based mobile telecommunication system, the context generator 12 or 15 of FIG. 1 is implemented into a local server 36. Referring to FIG. 3, reference numeral 31 represents a communication-restricted area, and reference numerals 32 and 33 represent a sending terminal and a receiving terminal, respectively. Reference numeral 34 represents packet data, transmitted from the sending terminal 32 to the receiving terminal 33, containing a call request signal and caller information, and reference numeral 35 represents packet data transmitted from the receiving terminal 33 to the sending terminal 32, containing a call response signal and receiver information. Here, the call response signal may include a call rejection signal. Reference numeral 37 represents packet data, transmitted between the receiving terminal 33 and the local server 36, containing communications restriction policy information and the receiver information.

Communications between the sending terminal 32 and the receiving terminal 33 are performed using a wireless long-distance communication medium, while communications between the receiving terminal 33 and the local server 36 are performed by using a wired or wireless short-distance communication medium. However, various communication means other than the long-distance and short-distance communication media can also be used.

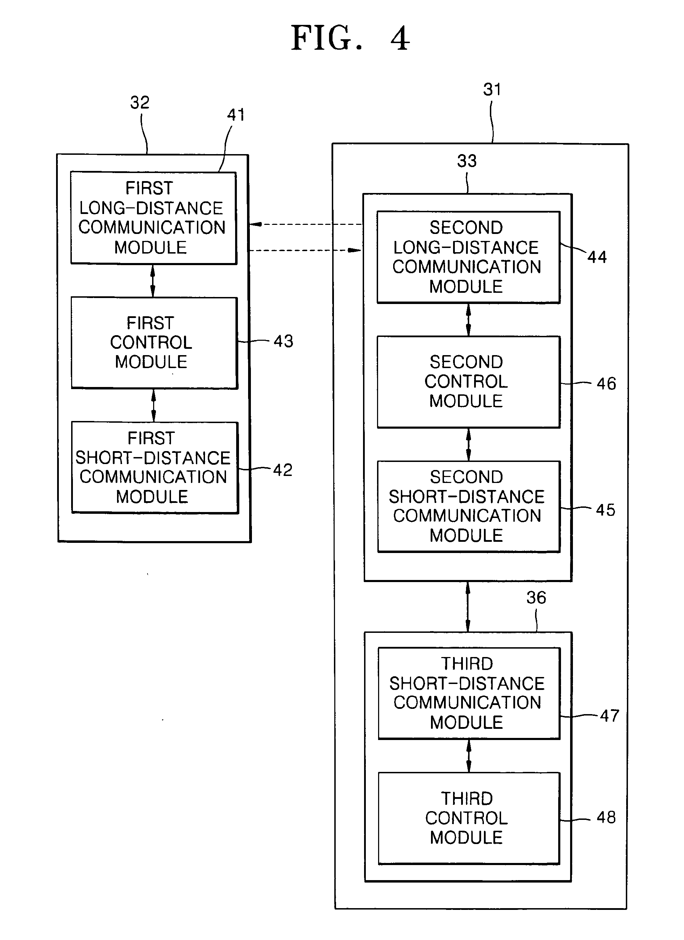

FIG. 4 is a detailed block diagram of the context-based mobile telecommunication system of FIG. 3. Referring to FIG. 4, the sending terminal 32 and the receiving terminal 33 include first and second long-distance communication modules 41 and 44, respectively, first and second short-distance communication modules 42 and 45, respectively, and first and second control modules 43 and 46, respectively. The local server 36 includes a third short-distance communication module 47 and a third control module 48.

As shown in FIG. 4, the sending terminal 32 and the receiving terminal 33 are mobile telecommunication terminals having the same elements. The terminal 32 or 33 serves as a typical mobile telecommunication terminal outside the communication-restricted area 31.

The first and second long-distance communication modules 41 and 44 adopt, for example, typical mobile phone modules, and serve typical long-distance wireless communications, such as code division multiple access (CDMA), time division multiple access (TDMS), or global system for mobile telecommunications (GSM), according to a communication protocol loaded thereinto.

Each of the first and second long-distance communication modules 42 and 45 senses the local server 36 and vice versa by sensing an area signal transmitted from the local server 36, issues a request for communications restriction policy information of the communication-restricted area 31 to the local server, and receives the requested communications restriction policy information from the local server 36. The process is performed using not only wireless LAN technologies such as Bluetooth technology or IEEE 802.11 but also short-range wireless transmitters or wired communication technology based on conductive material installed at an entrance gate of the communication-restricted area 31.

The second control module 46, which store a caller's right-to-communications exercising policy, receives the communications restriction policy for the communication-restricted area 31 that is transmitted from the local server 36 via the second short-distance communication module 45, store the received communications restriction policy, and selectively propagate the received communications restriction policy to the first control module 43 via the first and second long-distance communication modules 41 and 44. Thereafter, the second control modules 46 determines operation modes based on context information of the communication-restricted area 31 after assessing the right-to-communications exercising policy and the communications restriction policy requested by the communication-restricted area 31. A balance between the communications restriction policy and the right-to-communications exercising policy can be attained by selecting either the communications restriction policy or the right-to-communications exercising policy, selecting the communications restriction policy and the right-to-communications exercising policy with different priority levels allotted thereto, and selecting only a common aspect of the communications restriction policy and the right-to-communications exercising policy. An operation mode of the receiving terminal 33 is automatically determined based on a mediated policy, obtained by assessing both the communications restriction policy and the right-to-communications exercising policy, and an attribute element included in the context information of the communication-restricted area 31. The first and second control modules 43 and 46 provide information on the operation mode determined for the receiving terminal 33 to the first and second long-distance communication modules 41 and 44, respectively. Then, the first long-distance communication module 41 makes a call to the second long-distance communication module 44 according to the determined operation mode of the sending terminal 32, and the second long-distance communication module 44 receives the call according to the determined operation mode of the receiving terminal 33. Once the receiving terminal 33 is set to the operation mode determined by the first and second control modules 43 and 46, the context information of the communication-restricted area 31 is edited through user setting, and then the editing result is transmitted to the sending terminal 32. For example, if a user of the receiving terminal 33, i.e., the receiver, is not able to response to calls due to any reason, he or she may want to inform the caller of his/her current location (e.g. "conference room") for helping the callers to guess the receiver's situation. In this case, the receiver designates a location attribute in the attribute element 21 as "context to be exposed to the caller." Therefore, if the caller tries to make phone call with the receiver, he or she would hear the recorded message informing the location of the receiver, and the call is not notified to the receiver.

The local server 36 stores characteristic information, i.e., locational context information, of a predetermined area, in which it is installed, and its corresponding communications restriction policy, and transmits the stored context information of the predetermined area and the communications restriction policy to the receiving terminal 33, which located in the predetermined area 31, in a broadcasting or point casting manner using a wired/wireless communication medium. The third short-distance communication module 47, comprising at least one antenna, circumscribes the communication-restricted area 31 with limited radio signal transmissibility range. Alternatively, the third short-distance communication module 47 may be installed at an entrance or exit gate in the communication-restricted area 31 so that it can sense a terminal, which attempts to enter or exit the communication-restricted area 31, and can inform the terminal of being in the communication-restricted area 31 and its related communications restriction policy , in a wired or wireless manner. The third control module 48, which can be realized as a computer, stores and updates the context information of the communication-restricted area 31 and the communications restriction policy, which has been established based on the stored context information of the communication-restricted area 31, and transmits the communications restriction policy, including parameters based on the receiver's state information, to the second short-distance communication module 46 of the receiving terminal 33 via the third short-distance communication module 47.

If it is difficult to clearly define characteristics of a predetermined area (e.g., a library, cathedral, or movie theater) so that the attribute element 21 cannot be successfully matched with the policy element 22, a group of attributes, which is highly dependent on a specific operation mode of the operation element 24, such as restriction of communications, can be set. This will be described in greater detail in the following paragraphs.

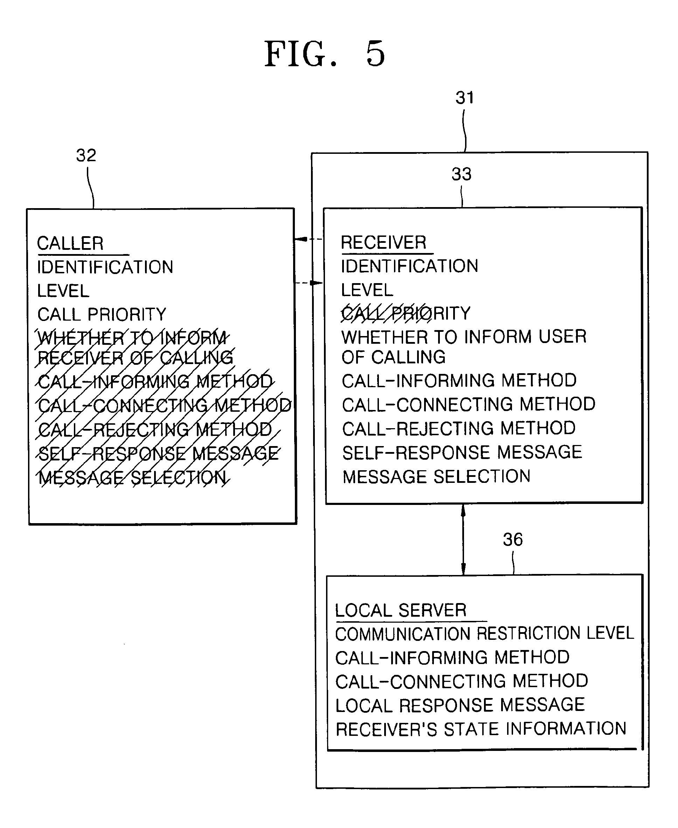

FIG. 5 is a diagram illustrating parameters of each of the elements of the context-based mobile telecommunication system of FIG. 3 or 4 in a case where a communications restriction mode is selected. If a terminal is used by a caller, parameters like "caller identification," "call level," and "call priority level" are enabled at the first control module 43 as it is depicted at the sending terminal 32 in FIG. 5. Contrary, if a terminal is used by a receiver, parameters like "whether to inform a user that a call has been received," "call-informing method," "call-connecting method," "call-rejecting method," "self-response message," and "message selection" are enabled and a parameter like "call priority," is disabled as it is depicted at the receiving terminal 33 in FIG. 5. Of the parameters of the third module 48 of the local server 36, parameters like "communication restriction level," "call-informing method," "call-connecting method," "local response message," and "receiver's state information, are enabled.

More specifically, a right-to-communications exercising policy of the receiving terminal 33, which is subordinate to a communications restriction policy of the communication-restricted area 31, includes parameters, which specify whether the receiving terminal 33 has been set to make or receive a call by the receiver, defining additional service information and an operation mode set by the receiver. For example, the right-to-communications exercising policy includes parameters, such as "whether to inform a user that a call has been received," "call-informing method", "call-connecting method," "call-rejecting method," "self-response message," and "message selection". A detailed explanation of each of the parameters will be described in the following paragraphs.

First, "whether to inform a user that a call has been received," which is a parameter set by the receiver using the receiving terminal 33, determines whether to inform the receiver of a call with a priority level that is high enough to pass the message filtering in the communication-restricted area 31. Since the receiver is allowed to set this parameter using the receiving terminal 33, even a call that has been authorized, by the local server 36, to be delivered can be rejected or ignored by the receiver. By appropriately setting this parameter, a call made by an unidentified caller can be rejected without notifying the receiver.

Second, the parameter "call-informing method" is set by prioritizing various notifying methods of being allowed by the communications restriction policy given from local server 36. For example, supposing that a local server of, for example, a movie theater, allows a vibration mode and a flash mode as the methods of informing the receiver that a call has been received, the receiver may give a higher priority level to the vibration mode than the flash mode.

Third, the parameter "call-connecting method" is set by prioritizing various connecting methods of being allowed by the communications restriction policy given from local server 36.

Fourth, the parameter "call-rejecting method" determines at least one method of rejecting a call with a higher communication restriction level than that of the communication-restricted area 31 using the receiving terminal 33. For example, if the sending terminal 33 is a cellular phone, the parameter "call-rejecting method" of the terminal may have the following modes: 000, 001, 010, 100, 101, and 111. More specifically, in the mode 000, the receiving terminal 33 is turned off, or a current mode of the receiving terminal 33 is switched to a sleep mode. In the mode 001, calls that are made to the receiving terminal 33 are logged without informing the receiver so that the receiver can search the logged calls after he/she gets out of the communication-restricted area 31. The mode 010 is the same as the mode 001 except that a response message, which has been recorded at the terminal, is automatically sent to the caller. The mode 011 is the same as the mode 001 except that a local response message, which is given by the local server 36, is automatically sent to the caller. In the mode 100, the receiver is informed that there is a call for the receiver in an allowed manner, but talk is not established. The mode 101 is the same as the mode 100 except that the local response message is automatically sent to the caller. In the mode 111, the caller is directed to a voice mail service.

Fifth, the parameter "self-response message" specifies a predetermined message that is automatically sent to the caller if a call made by the caller is put in a standby mode or is rejected by the receiving terminal. The predetermined message can be automatically created by using the receiver's state information included in the communications restriction policy provided by the local server 36. Alternatively, the predetermined message can be simply recorded by the receiver. For example, assume that the receiver is currently watching a play, which is expected to end by 5 p.m., in a theater and desires to send a message, indicating that he/she wants any prospective callers to call him/her again after the play is over, to the callers, the receiver may create a message, such as "I am not available for now, so please, call me after $time", before attending the theater. Then, during the receiver is watching the play in the theater, the local server 36 in the theater sends the receiver's state information indicating that $time in the message is 5 p.m. to the sending terminal 32 so that the caller can eventually hear a finally generated message, such as "I am not currently available, so please, call me after 5 p.m.".

Sixth, the parameter "message selection" enables the receiver to determine a type of message to be sent to the caller using the receiving terminal 33. For example, by setting this parameter, the receiver may choose the response message among the message made by the receiving terminal 33, the local message made by the local server 36, a telemarketing message made by a third business proprietor.

In the meantime, the right-to-communications exercising policy of the receiving terminal 33 may further include "call priority" as a parameter.

"Call priority", which is a parameter determined by the caller, is set so that the caller can make an emergency call to the receiver. For example, this parameter is usually set to "false" (F). However, if the caller hits a predetermined button or uses a predetermined program, this parameter can be set to "true" (T), and it makes the receiving terminal 33 assume the call as an important call enough not to be ignored. For the convenience of manipulation, two modes, i.e., "important/not important", are provided as defaults. However, if necessary, three or more modes can be provided as defaults. Assuming emergency, one of the several modes may allow absolute calling that should be notified and established, regardless of how the parameter "whether to inform a user that a call has been received" and other parameters have been set. In order to prevent the emergency calls from being overused or abused, only those who are authorized by the receiver or by law should be allowed to make an emergency call to the receiver and then should be registered with the receiving terminal 33. For example, the user of the receiving terminal 33 allots points of enabling emergency calls to the authorized callers. Once one of the callers makes an emergency call, the point which allotted to the caller is consumed, and, if the caller overuses the emergency call, the point runs away and the right to make an emergency call to the receiver expires unless the receiver recharges the point for the caller.

The communications restriction policy, which is determined by the local server 36, specifies additional service information, information on unauthorized callers whose rights to communications are to be restricted, and methods of restricting the unauthorized callers' rights to communications. For example, the communications restriction policy includes parameters, such as "communication restriction level," "call-informing method," "call-connecting method," "local response message", and "receiver's state information". A detailed explanation of each of the parameters will be presented in the following paragraphs.

First, the parameter "communication restriction level" indicates a communication restriction level of the communication-restricted area 31, which is determined in consideration of both the caller's basic communication restriction level and a communication restriction level given to the caller by the receiver. This parameter specifies different operation modes, i.e., restriction of making a call, restriction of receiving a call, and restriction of making and receiving a call.

A call receiving restriction level can be determined in the following manner. Restriction level 0 is given to a limited number of groups or organizations, such as government organizations, hospitals, and other public offices, restriction level 1 is given to those who are authorized by the receiver or registered with the receiving terminal 33 as the receiver's family members or employers, restriction level 2 is given to those who are registered with the receiving terminal 33 as those who are registered with the receiving terminal 33 but are not the receiver's family members or employers, and restriction level 3 is given to unidentified callers. A higher call priority level is given to a group of callers with a lower restriction level. For example, if the receiving terminal 33 is currently located in an area with restriction level 2, the receiver cannot be even informed of calls from those who are not registered with the receiving terminal 33. If the receiving terminal 33 is currently located in an area with restriction level 0, the receiver can receive calls from only a few authorized callers, such as government organizations, hospitals, and other public offices.

Likewise, attempts to make a call can also be restricted in the same manner as attempts to receive a call. For example, supposing that the receiving terminal 33 is set to a lower level than restriction level 2, the receiving terminal 33 is disabled in an area with restriction level 2 so that the receiving terminal 33 cannot make calls.

Second, with the parameter "call-informing method," calls from callers with a lower restriction level than that of the local server 36 are all rejected, and only calls from callers with a higher restriction level than that of the local server 36 are acceptable. The receiver is informed of such authorized calls using an allowable informing means, such as sound, backlighting, or vibration. If the receiving terminal 33 enters a movie theatre in which the local server 36 is installed, the receiver is preferably informed of authorized calls with the help of vibration of the receiving terminal or a flicker of light from the receiving terminal other than sound or too intense light. Alternatively, the receiving terminal 33 can be automatically set in a workplace, in which electromagnetic waves or vibrations are not appropriate for call informing means, so that the receiver can be informed of authorized calls with the help of sound or light from the receiving terminal 33.

Third, the parameter "call-connecting method," which determines in what manner authorized calls should be connected to the receiver, involves connecting a call from the sending terminal 32 to the receiving terminal or putting a call from the sending terminal in a standby mode until the receiving terminal 33 gets away from the communication-restricted area 31. For example, if the communication-restricted area 31 is a conference room, an instant connection of any authorized call to the receiver is inappropriate. Thus, an authorized call is preferably put in a standby mode until the receiver gets out of the conference room so that the authorized call cannot be connected to the receiver as long as the receiver is in the conference room. Alternatively, the authorized call can be connected to the receiver even though the receiver is in the conference room. However, for example, several minutes after the call was connected to the receiver, the connection between the caller and the receiver may be automatically cut off, or the quality of the connection between the caller and the receiver may automatically deteriorate to a certain level.

Fourth, the parameter "local response message", which is a message created in consideration of the receiver's state information or location information, is sent to the caller when a call made by the caller is put in a standby mode or is rejected. For example, assume that the receiver, Mr. Kim, is enjoying an opera, "Le Maitre de Musique," in an opera house with call receiving restriction level 2 and has already authorized transmission of a local response message to any prospective callers. If a level 3 call is made to the receiver, the receiving terminal 33 receives a local response message that reflects the receiver's state information and generated by the local server 36, and thus the caller hears the customized local response message, such as "Mr. Kim is seeing the opera "Le Maitre de Musique" at the opera house. The opera is expected to end at 10:15 p.m., so please, call him later."

Fifth, the parameter "receiver's state information" indicates the receiver's state information at the communication-restricted area 31, in which the receiver is currently located, such as the name of the opera house where the receiver is located and what the receiver is doing in the opera house. This state information can be sent to the caller, for example, as the elements of a local response message or as machine-readable data which is used by the first control module 43 in the sending terminal 32.

In addition, if the receiver allows "the available time for receiving calls" as the only exposed his/her state information, considering privacy, the local server 36 may send the time information to the sending terminal 32, and hide details of the receiver's current context from the caller. In this case, a program embedded in the sending terminal 32 can use the time information to set notification time for informing the caller that "Now the time when the receiver becomes available to receive a phone call.", and, as a result, the caller may not miss the chance to call the receive again.

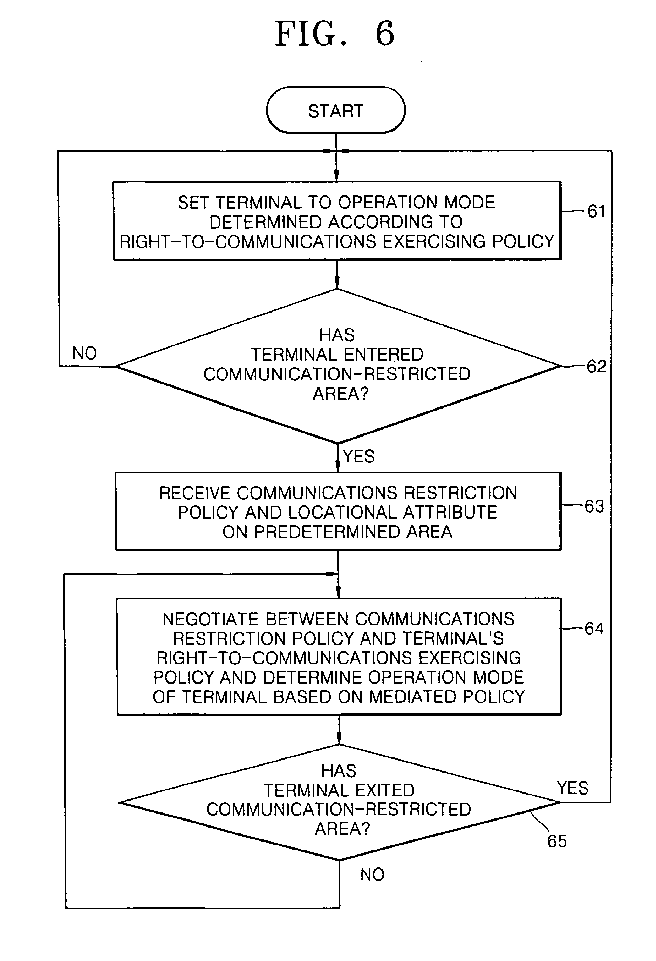

FIG. 6 is a flowchart, illustrating the operation of the receiving terminal when it enters or exits the communication-restricted area 31.

Referring to FIG. 6, in step 61, the second control module 45 controls the receiving terminal 33 to operate according to an operation mode, which is recommended based on a right-to-communications exercising policy set in the receiving terminal 33. Therefore, the receiving terminal 33 serves as a typical mobile telecommunication terminal outside the communication-restricted area 31.

In step 62, it is determined whether the receiving terminal 33 has entered the communication-restricted area 31 with a communication restrictions policy. If the receiving terminal 33 is yet to enter the communication-restricted area 31, the method returns to step 61. In step 62, the receiving terminal 33 or the local server 36 may determine whether the receiving terminal 33 has entered the communication-restricted area 31. More specifically, the receiving terminal 33 may determine that it has entered the communication-restricted area 31 when receiving an area signal that is consecutively transmitted from the third short-distance communication module 47 of the local server 36 to the communication-restricted area 31 via the second short-distance communication module 45. The local server 36 may also determine that the receiving terminal 33 has entered the communication-restricted area 31 by using a wired/wireless short-distance communication means when the receiving terminal 33 contacts transmitter (not shown) installed at an exit gate in the communication-restricted area 31.

In step 63, if it is determined in step 62 that the receiving terminal 33 has entered the communication-restricted area 31, information on the receiving terminal 33, i.e., packet data including identification, a call making restriction level and a call receiving restriction level of the receiving terminal 33, is transmitted from the second short-distance communication module 45 of the receiving terminal 33 to the third short-distance communication module 47 of the local server 36, and the communication restrictions policy and context information of the communication-restricted area 31 are transmitted from the local server 36.

In a case where the communication restrictions policy as the part of the area signal is consecutively transmitted from the third short-distance communication module 37 of the local server 36 to the communication-restricted area 31, step 63 can be omitted by receiving both the area signal and its embedded communication restrictions policy using the second control module 46 of the receiving terminal 33.

In step 64, information on the operation mode, which is determined by the second control module 46, is provided to the second long-distance communication module 44, and the second long-distance communication module 44 switches a current mode of the receiving terminal 33 to the determined operation mode.

In step 65, it is determined whether the receiving terminal 33 has exited the communication-restricted area 31. If it is determined in step 65 that the receiving terminal 33 has exited the communication-restricted area 31, the method returns to step 61 so that the receiving terminal 33 can operate in a basic operation mode. If the receiving terminal 33 is yet to exit the communication-restricted area 31, the receiving terminal 33 is controlled to keep operating in the operation mode determined in step 64. In step 65, like in step 62, the receiving terminal 33 or the local server 36 may determine whether the receiving terminal 33 has exited the communication-restricted area 31. More specifically, the receiving terminal 33 determines that it has exited the communication-restricted area 31 if the second short-distance communication module 45 fails to recognize the area signal transmitted from the third short-distance communication module 47 of the local server 36. When the receiving terminal 33 makes contacts with a transmitter installed at an entrance gate in the communication-restricted area 31, the local server 36 determines that the receiving terminal 33 has exited the communication-restricted area 31.

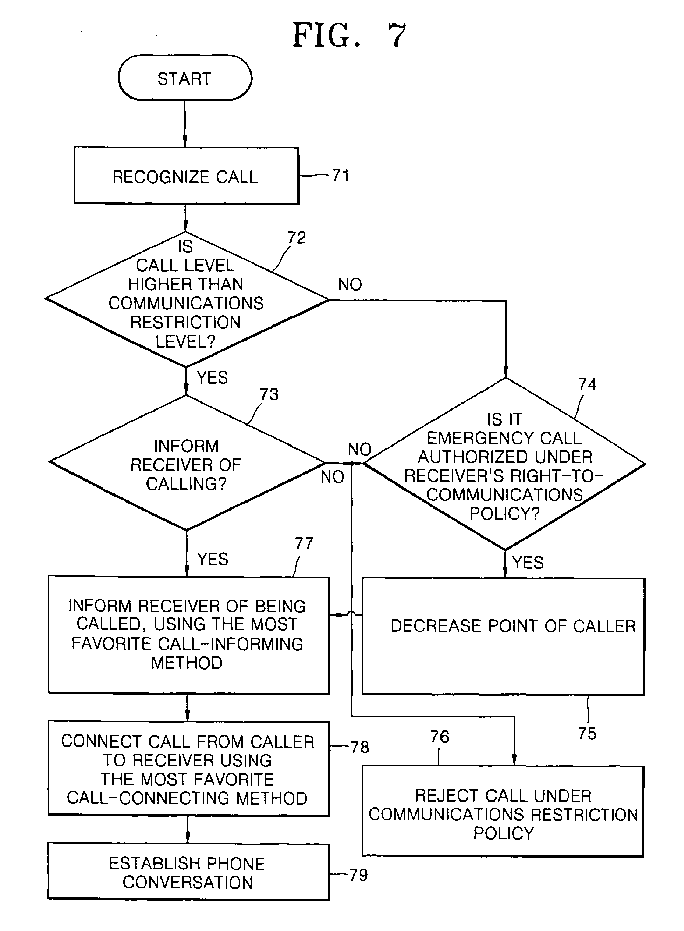

Hereinafter, the operation of the receiving terminal 33 according to the operation mode determined in step 64 will be described in greater detail with reference to FIG. 7.

Referring to FIG. 7, in step 71, the second long-distance communication module 44 of the receiving terminal 33 recognizes a call from the first long-distance communication module 41 of the sending terminal 32. The call from the first long-distance communication module 41 contains call data, such as the caller's identification and call making restriction level. The second long-distance communication module 41 provides the caller's information to the second control module 46.

In step 72, the second control module 45 of the receiving terminal 33 determines whether the call making restriction level of the sending terminal 32 is higher than the communication restriction level of the communication-restricted area 31. The call having restriction level higher than the communication restriction level means that the call is important enough to pass through filtering. If the call making restriction level of the sending terminal 32 is higher than the communication restriction level of the communication-restricted area 31, the method proceeds to step 73. Otherwise, the method proceeds to step 74.

In step 73, it is determined whether to inform the receiver that a call has been received from the sending terminal 32 or not, by referring to the parameter "whether to inform the receiver that a call has been received" of the receiver's right-to-communications exercising policy stored in the second control module 46. If there is no need to inform the receiver that a call has been received from the sending terminal 32, the method proceeds to step 76.

If it is determined in step 72 that the call making restriction level of the sending terminal 32 is lower than the communication restriction level of the communication-restricted area 31 or if it is determined in step 73 that the receiver rejects to be informed that a call has been received, it is determined whether the call made by the sending terminal 32 is an emergency call authorized by the receiver, by referring to the parameter "call priority" included in the data packet transmitted from the first long-distance communication module 41. If this parameter is set in the data packet, the call made by the sending terminal 32 is determined as an emergency call authorized by the receiver.

In step 75, if the call made by the sending terminal 32 is determined as an emergency call authorized by the receiver in step 74, the point is reduced, which represents a maximum number of times that the sending terminal 32 can make an emergency call to the receiving terminal 33.

In step 76, if it is determined in step 73 that there is no need to inform the receiver that a call has been received from the sending terminal 32, if it is determined in step 74 that the call made by the sending terminal 32 is not an emergency call at all or if the call made by the sending terminal 32 is an emergency call but is yet to be authorized by the receiver, a call response signal is transmitted to the first long-distance communication module 41 of the sending terminal 32 using a call rejecting method determined by the parameter "call-rejecting method" of the receiver's right-to-communications exercising policy.

In step 77, if it is determined in step 73 that there is a need to inform the receiver that a call has been received from the sending terminal 32, the second control module 46 selects the one with a higher priority level given by the receiver among various call informing methods that are acceptable under the communications restriction policy of the communication-restricted area 31 and provides information on the selected call informing method to the second long-distance communication module 44. The second long-distance communication module 44 informs the receiver that a call has been received from the sending terminal 32 using the selected call informing method.

In step 78, the second control module 46 selects the one with a higher priority level given by the receiver among various call connecting methods that are acceptable under the communications restriction policy of the communication-restricted area 31 and provides information on the selected call connecting method to the second long-distance communication module 44. If the second long-distance communication module 44 connects the call from the sending terminal 32 to the receiving terminal 33 using the selected call connecting method, a phone conversation is enabled in step 79.

Hereinafter, a detailed explanation of an example of the context-based communication method of the present invention will be presented.

Assume that a person A goes to a movie theater, in which a context generator, like the ones 12 and 15 illustrated in FIG. 1, is installed, carrying a smart phone with him/her. The person A generally accepts a communication restrictions policy recommended by the movie theater as a default but sets his/her smart phone so that whatever happens, the smart phone can receive a text message from a specific person B. Attributes of the movie theater are set as follows: Location = "movie theater" and End_Time = "15:30". The communications restriction policy recommended by the movie theater is as follows:
IF (Location = "movie theater" AND Current_Time < End_Time)
THEN (Default_Act = "rejecting a call + logging/storing a call")
IF (Priority_of_Caller = "HIGH" AND Data_Type = "SMS (No voice)")
THEN (Act = "receiving a call" AND Alarm = "vibration").

During the person A watches a movie in the movie theater, all calls are automatically rejected by the person A's smart phone under the recommended communication restrictions policy so that the person A can enjoy the movie without being interrupted or informed that there have been calls for him/her. If a person C, who is one of the person A's friends, tries to look the person A up in an instant messenger, the instant messenger shows the person A's current state as "disconnected". If the person B whose name is registered with the person A's smart phone with a high priority level sends a text message to the person A using a short message system (SMS), the person A's smart phone receives the text message and informs the person A of the reception of the text message from the person B in a vibration mode. When the movie is over, i.e., when Current_Time > End_Time, a current call rejection mode is cancelled, and a list of calls that have been received during the running time of the movie is displayed in a pop-up window. If the person A's smart phone has sent information on the attribute "End_Time" of the movie theater to the person C when rejecting a call made by the person C, the person C's smart phone memorizes the information sent by the person A's smart phone and informs the person C, who might have forgotten that he/she needs to call the person A again after 15:30, that the person C is allowed to make a call to the person A by ringing an alarm bell at 15:30. In the above processes, the person A has only sent a high priority level to the person. The person A's smart phone operates intelligently in response to the person A's context information (i.e., watching a movie) by exchanging necessary information with the person B's smart phone or the person C's smart phone.

Exceptionally, the local server 36 may turn off the receiving terminal 33 regardless of user setting if the receiver is in such a place as an airplane, in which communications are completely restricted for some security reason.

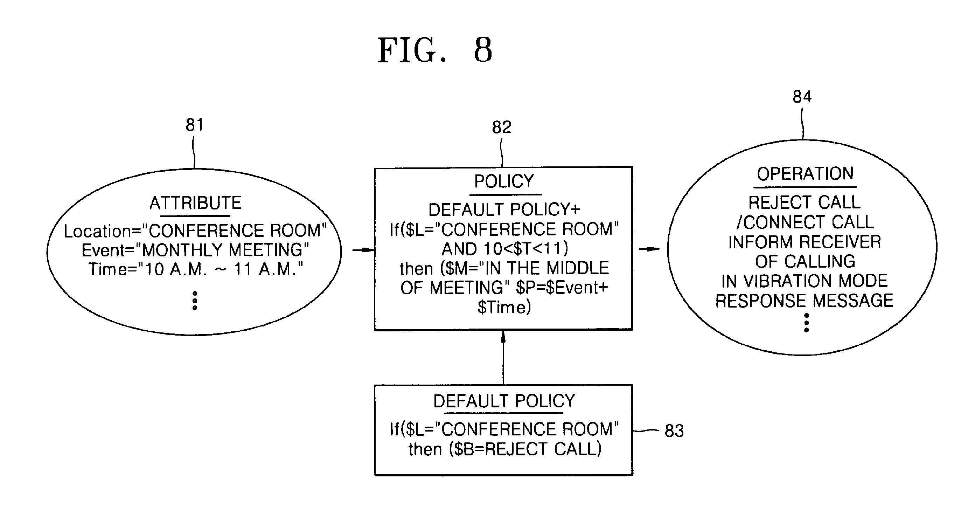

FIG. 8 is a diagram illustrating the association of attributes of a circumstance where a receiver is with operation modes of a terminal in a context-based communication method according to the present invention. Referring to FIG. 8, assume that the receiver is in the middle of a monthly meeting in a conference room. As shown in FIG. 8, an attribute element 81 details Location = "conference room", Event = "monthly meeting", and Time = "10 a.m. to 11 a.m.". Then, a policy element 82, which associates the attribute element 81 with an operation element 84, can be expressed as follows:
IF (Location = "conference room")
THEN (Default_Act = "rejecting a call")
IF (Location = "conference room" AND 10 < Current_Time < 11)
THEN (Message = "in the middle of a monthly meeting" and "11" AND Act = "rejecting a call").

Then, the caller can hear a message "the receiver is in the middle of a monthly meeting, so please, call him/her again after 11 p.m."

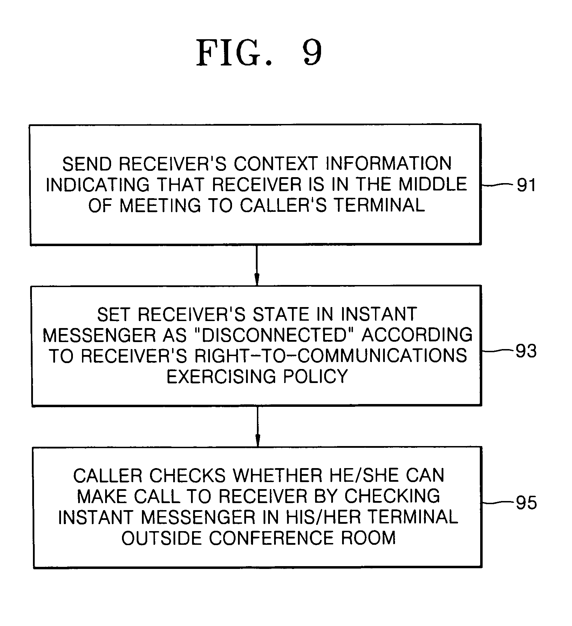

FIG. 9 is a flowchart illustrating the operation of the sending and receiving terminals 32 and 33 according to the attribute element 81 and the policy element 82 of FIG. 8. Referring to FIG. 9, assume that an instant messenger is installed in each of the sending and receiving terminals 32 and 33.

In step 91, the local server 36 sends context information indicating that the receiver is in the middle of a monthly meeting to the sending terminal 32. In step 92, the sending terminal 32 sets the receiver's state in the instant messenger to "disconnected" under the caller's right-to-communications exercising policy in step 92. In step 93, the caller recognizes that it is impossible for now to get connected to the receiver by checking the instant messenger of the sending terminal 32.

The present invention can be realized as a computer-readable code on a computer-readable recording medium. Such a computer-readable medium may be any kind of recording medium in which computer-readable data is stored. Examples of such computer-readable media include ROMs, RAMs, CD-ROMs, magnetic tapes, floppy discs, optical data storing devices, and carrier waves (e.g., transmission via the Internet), and so forth. Also, the computer-readable code can be stored on the computer-readable media distributed in computers connected via a network. Furthermore, functional programs, codes, and code segments for realizing the present invention can be easily analogized by programmers skilled in the art.

The present invention has the following advantages.

First, the present invention helps people to decide whether to make or receive a call by giving them an automatically-created context information without requiring any manual input.

Second, the present invention can automatically filter out callings, which are considered inappropriate or unnecessary for a predetermined circumstance, while allowing important callings. Therefore, users can be prevented from being distracted or interrupted by such unnecessary callings.

Third, the present invention can prevent users from carelessly breaking rules required in the predetermined circumstance. Therefore, decorous communication can be achieved.

Fourth, the present invention helps a business proprietor who needs to provide a place with communications restricted to some extent for customers or employees, to come up with a more reasonable and less intrusive communications restriction policy and recommend it to the customers or employees, thus causing less trouble to the customers or employees. In this regard, the present invention could appeal to owners of cinemas, theaters or conference rooms, who have been hesitant to install a communications restriction system, worrying the complaints from the customers.

Fifth, the present invention protects users from unsolicited telemarketing in a specific place (e.g., a conference room or office) by blocking unregistered callings. In addition, the present invention may create a new business model that users sell the right to make a telemarketing call to the customers by registering their caller ID authorized. Consequently, the system protects the users' right of keeping their own attention under the control, the precious resource under the ubiquitous computing environment.

Sixth, the present invention provides more customized and more caller-friendly automatic response services to callers by allowing receivers to control a call-standby message or a call-rejection message. In addition, by giving the right of mediating exposure of the context information to customers, establishing new trade between users and the business proprietor having a local server is possible.

Seventh, from the view of business, there is no entry barrier in a mobile telecommunication market, since, in the present invention, required infrastructures can be constructed through a well distribution of terminals with long-distance and short-distance communication modules installed therein and local servers without the help of conventional mobile telecommunication network providers.

Eighth, the present invention would initiate the development of an agent, freeing users from making repetitious, trivial decisions, in the area of mobile telecommunication.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A context-based terminal, comprising:
a communication module, which enables mobile telecommunications between terminals and receives a context information containing a locational attribute and its communications restriction policy transmitted from a predetermined area; and
a control module, which automatically switches an operation mode of the context-based terminal to another, according to a mediated policy obtained by negotiating between the communications restriction policy and a right-to-communications exercising policy previously set in the context-based terminal.

2. The context-based terminal of claim 1, wherein the control module selects either the communications restriction policy or the right-to-communications exercising policy, selects both the communications restriction policy and the right-to-communications exercising policy with different priority levels allotted thereto, or selects a common aspect of the communications restriction policy and the right-to-communications exercising policy.

3. The context-based terminal of claim 1, wherein, in the control module, if the terminal doesn't have the right-to-communications exercising policy, it sets the operating mode corresponding to the communications restriction policy.

4. The context-based terminal of claim 1, wherein, in the control module, if there is no communications restriction policy or if the communications restriction policy is opposing to the right-to-communications exercising policy, the terminal basically follows a right-to-communications exercising policy and adopts the acceptable parts of the opposing communications restriction policy.

5. The context-based terminal of claim 1, wherein the control module sets the context-based terminal to a predetermined operation mode, according to a mediated policy which is determined as a result of negotiation between the communications restriction policy and the right-to-communications exercising policy, edits the locational attribute information on the predetermined area that the context-based terminal has just entered and sends the edited locational attribute information to a caller's terminal.

6. A context-based mobile telecommunication system, comprising:
a context generator, which generates and stores context information containing a locational attribute and its communications restriction policy on a predetermined area; and
a terminal, which is automatically set to a predetermined operation mode according to a mediated policy obtained by negotiating between a right-to-communications exercising policy previously set therein and the communications restriction policy, in response to the context information, transmitted from the context generator.

7. The context-based mobile telecommunication system of claim 6, wherein the terminal selects either the communications restriction policy or the right-to-communications exercising policy, selects both the communications restriction policy and the right-to-communications exercising policy with different priority levels allotted thereto, or selects a common aspect of the communications restriction policy and the right-to-communications exercising policy.

8. The context-based mobile telecommunication system of claim 6, wherein, in the terminal, if the terminal doesn't have the right-to-communications exercising policy, it sets the operating mode corresponding to the communications restriction policy.

9. The context-based mobile telecommunication system of claim 6, wherein, in the terminal, if there is no communications restriction policy or if the communications restriction policy is opposing to the right-to-communications exercising policy, the terminal basically follows a right-to-communications exercising policy and adopts the acceptable parts of the opposing communications restriction policy.

10. The context-based mobile telecommunication system of claim 6, wherein the context generator is comprised of a local server installed in the predetermined area, and the local server generates the context information on the predetermined area and establishes the communication restrictions policy based on the generated context information.

11. The context-based mobile telecommunication system of claim 6, wherein the context generator is installed in the terminal or is integrated into one body with the terminal, the context generator sensing the locational attribute information on the predetermined area that the terminal has just entered and sending the communications restriction policy corresponding to the locational attribute information to the terminal.

12. The context-based mobile telecommunication system of claim 6, wherein after being set to the predetermined operation mode, the terminal edits the locational attribute information on the predetermined area that it has just entered and sends the edited context information to a caller's terminal.

13. The context-based mobile telecommunication system of claim 10, wherein the terminal comprises:
a first communication module, which enables mobile telecommunications between terminals and controls the terminal's making or receiving a call according to the predetermined operation mode;
a second communication module, which receives the context information from the local server if the terminal has entered the predetermined area; and
a first control module, which stores the right-to-communications exercising policy, negotiates between the right-to-communications exercising policy and the communications restriction policy received from the second communication module, determines an operation mode of the first communication module based on a mediated policy obtained as a result of negotiation between the right-to-communications exercising policy and the communications restriction policy, and provides information on the determined operation mode to the first communication module.

14. The context-based mobile telecommunication system of claim 13, wherein the local server comprises:
a third communication module, which sends the context information on the predetermined area and the communications restriction policy to the terminal if it senses that the terminal has entered the predetermined area; and
a second control module, which creates and stores the context information on the predetermined area.

15. A context-based communication method, comprising:
(a) creating and sending context information containing a locational attribute and its communications restriction policy on a predetermined area;
(b) allowing a terminal to receive the context information;
(c) obtaining a mediated policy by negotiating between the communications restriction policy and a right-to-communications exercising policy previously set in the terminal; and
(d) switching an operation mode of the terminal to another operation mode, according to the mediated policy.

16. The context-based communication method of claim 15, wherein in step (c), either the communications restriction policy or the right-to-communications exercising policy is selected, both the communications restriction policy and the right-to-communications exercising policy are selected with different priority levels allotted thereto, or a common aspect of the communications restriction policy and the right-to-communications exercising policy is selected.

17. The context-based communication method of claim 15, further comprising:
(e) editing the locational attribute information on the predetermined area that the context-based terminal has just entered and sending the edited locational attribute information to a caller's terminal.

18. The context-based communication method of claim 17, wherein the receiver gives emergency call points to the caller's terminal, and the points decrease when the emergency call is generated from the caller's terminal.

19. The context-based communication method of claim 18, wherein the emergency call points are given to callers who have already been registered with a receiver's terminal.
